# EUROPÄISCHE PATENTSCHRIFT

(11) **EP 2 606 520 B1**
(45) Veröffentlichungstag und Bekanntmachung des Hinweises auf die Patenterteilung: **20.04.2016**
(21) Anmeldenummer: 11748578.9
(22) Anmeldetag: 11.08.2011
(51) Int. Cl.: H01M 2/02, H01M 2/06, H01M 2/10, H01M 2/12

(54) **ELEKTROCHEMISCHE ZELLE MIT WENIGSTENS EINER DRUCKENTLASTUNGSVORRICHTUNG**
ELECTROCHEMICAL CELL HAVING AT LEAST ONE PRESSURE-RELIEF DEVICE
CELLULE ÉLECTROCHIMIQUE AVEC AU MOINS UN DISPOSITIF DE DÉCOMPRESSION

(30) Priorität: 17.08.2010 DE 102010034545
(43) Veröffentlichungstag der Anmeldung: 26.06.2013
(73) Patentinhaber: Li-Tec Battery GmbH, 01917 Kamenz (DE)
(72) Erfinder: SCHAEFER, Tim, 99768 Harztor (DE)
(74) Vertreter: JENSEN & SON
(86) Internationale Anmeldenummer: PCT/EP2011/004047
(87) Internationale Veröffentlichungsnummer: WO 2012/022448

(56) Entgegenhaltungen:
- EP-A1- 2 131 413
- EP-A1- 2 494 631
- JP-A- 2006 079 858
- JP-A- 2006 156 185
- JP-A- 2009 021 067
- US-A1- 2008 171 259

## Beschreibung

Die vorliegende Erfindung betrifft eine elektrochemische Zelle für eine Batterieanordnung, insbesondere eine elektrochemische Zelle mit wenigstens einer Druckentlastungsvorrichtung.

Als elektrochemische Energiespeichervorrichtung sind Batterien (Primärspeicher) und Akkumulatoren (Sekundärspeicher) bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und so gespeichert wird und in denen bei Anschließen eines elektrischen Verbrauchers chemische Energie in einer elektrochemischen Entladereaktion in elektrische Energie umgewandelt wird. Dabei werden Primärspeicher in der Regel nur ein Mal aufgeladen und nach ihrer Entladung entsorgt, während Sekundärspeicher mehrere (von einigen 100 bis über 10.000) Zyklen von Aufladung und Entladung erlauben. In diesem Zusammenhang ist anzumerken, dass insbesondere im Kraftfahrzeugbereich auch Akkumulatoren als Batterien bezeichnet werden.

Die vorliegende Erfindung wird im Zusammenhang mit Lithium-Ionen-Batterien zur Versorgung von Kfz-Antrieben beschrieben. Es wird darauf hingewiesen, dass die Erfindung aber auch unabhängig von der Chemie und der Bauart der elektrochemischen Zelle und der Batterie und auch unabhängig von der Art des versorgten Antriebes Verwendung finden kann.

Aus dem Stand der Technik sind elektrochemische Zellen bekannt, die eine Energieeinheit aufweisen, welche einen Elektrodenstapel, wenigstens einen mit dem Elektrodenstapel verbundenen Stromableiter und eine den Elektrodenstapel zumindest teilweise umschließende Umhüllung aufweist. Die Umhüllung soll einerseits den Austritt von Chemikalien aus dem Elektrodenstapel in die Umgebung verhindern und andererseits die Bestandteile der Zelle vor unerwünschter Wechselwirkung mit der Umgebung, beispielsweise gegen Wasser oder Wasserdampf, schützen.

Ferner sind aus dem Stand der Technik elektrochemische Zellen bekannt, bei denen eine derartige Energieeinheit zumindest teilweise in wenigstens einem Rahmenelement aufgenommen ist. Es wird diesbezüglich beispielhaft verwiesen auf die nachveröffentlichten DE 10 2009 010 794 A1 und DE 10 2010 022 217 A1 der Anmelderin. Solche Rahmenelemente dienen insbesondere der mechanischen Stabilisierung der Energieeinheiten insbesondere während des Fertigungsprozesses einer Batterieanordnung mit mehreren elektrochemischen Zellen.

Die elektrochemischen Zellen bzw. Speichervorrichtungen können bei starker Belastung oder Überlastung zum Beispiel im Fall einer Überladung oder eines Kurzschlusses, im Schadensfall oder auch im Normalbetrieb bei starker Erhitzung von außen in einen thermisch überhitzten Zustand geraten, der einen erhöhten Zelleninnendruck erzeugt, welcher zum Bersten, Entzünden oder Explodieren der Zelle und des Gehäuses führen kann. Speziell im Bereich der Lithium- oder Lithium-Ionen-Batterien existiert eine besondere Gefährdung, da diese Batterien flüssige, brennbare, organische Elektrolyte enthalten, welche dabei austreten können.

Es sind weiter verschiedene elektrochemische Zellen bekannt, bei denen eine Druckentlastungsvorrichtung zum Abbau eines derartigen Überdrucks im Innern der Energieeinheit vorgesehen ist. Solche Druckentlastungsvorrichtungen sind zum Beispiel als lokale Schwächung der Siegelnaht beispielsweise mittels eingelegten Elementen mit niedrigerem Schmelzpunkt ausgebildet ist. Es wird diesbezüglich beispielhaft verwiesen auf die KR 10 2009 0076343 A, die US 2003/0148173 A1, die US 7,122,276 B2, die US 2010/0112436 A1 oder die WO 2009/078604 A2. Weitere elektrochemische Zellen mit Druckentlastungsvorrichtungen sind zum Beispiel aus JP 2006-079858 A, JP 2009-021067 A und US 2008/0171259 A1 bekannt.

Aus der DE 10 2007 063 193 A1 ist eine Lithium-Ionen-Batterie in Flachbauweise bekannt, die einen eine elektrochemische Zelle umgebenden Gehäuserahmen mit einer seitlichen Druckentlastungsvorrichtung in Form eines Berstbereiches aufweist, um in kritischen Überdrucksituationen eine Druck- und Gasableitung seitlich nach außen zu ermöglichen.

Der Erfindung liegt die Aufgabe zugrunde, eine verbesserte elektrochemische Zelle zu schaffen, welche bei Bedarf einen sicheren Abbau eines Überdrucks im Innern der Energieeinheit ermöglicht.

Dies wird erfindungsgemäß durch die Lehre der unabhängigen Ansprüche erreicht. Zu bevorzugende Weiterbildungen der Erfindung sind Gegenstand der Unteransprüche.

Erfindungsgemäß ist eine elektrochemische Zelle vorgesehen, die eine Energieeinheit, wenigstens ein die Energieeinheit zumindest teilweise aufnehmendes Rahmenelement und wenigstens eine Druckentlastungsvorrichtung zum Abbau eines Überdrucks in der Energieeinheit aufweist. Die Energieeinheit weist einen Elektrodenstapel, wenigstens einen mit dem Elektrodenstapel verbundenen Stromableiter und eine den Elektrodenstapel zumindest teilweise umschließende Umhüllung auf. Die Umhüllung der Energieeinheit wiederum weist an den umlaufenden Schmalseiten der elektrochemischen Zelle mehrere Randabschnitte auf, wobei sich der wenigstens eine Stromableiter in einem ersten Randabschnitt zumindest teilweise aus der Umhüllung heraus erstreckt und dieser erste Randabschnitt der Umhüllung eine im Wesentlichen fluiddichte erste Siegelnaht aufweist. Ferner weist das wenigstens eine Rahmenelement im Bereich des ersten Randabschnitts der Umhüllung wenigstens einen ersten Auflagesteg auf, welcher maximal etwa 1 mm von der ersten Siegelnaht der Umhüllung beabstandet ist.

Erfindungsgemäß ist auch eine elektrochemische Energiespeichervorrichtung bzw. Batterieanordnung mit einem Stapel von mehreren solchen elektrochemischen Zellen vorgesehen.

Gemäß der vorliegenden Erfindung erstreckt sich der wenigstens eine Stromableiter in einem ersten Randabschnitt zumindest teilweise aus der Umhüllung heraus und weist das wenigstens eine Rahmenelement im Bereich des ersten Randabschnitts der Umhüllung wenigstens einen ersten Auflagesteg auf, welcher maximal etwa 1 mm von der ersten Siegelnaht der Umhüllung in deren erstem Randabschnitt beabstandet ist. Aufgrund dieses ersten Auflagesteges im Bereich des ersten Randabschnitts der Umhüllung verhindert das Rahmenelement ein Aufreißen oder Aufbrechen der Siegelnaht im Fall eines Überdrucks im Innern der Energieeinheit im Bereich der Stromableiter (welcher bei herkömmlichen Zellen häufig eine Schwachstelle der Siegelnaht darstellt) und die Druckableitung kann ausschließlich über die speziell dafür vorgesehene Druckentlastungsvorrichtung erfolgen (welcher Vorgang auch als "Venting" bezeichnet wird).

Durch das Vorsehen eines Restspaltes zwischen dem Auflagesteg des Rahmenelements und der Siegelnaht in diesem ersten Randabschnitt der Umhüllung besteht vorteilhaft die Möglichkeit, ein Rahmenelement für elektrochemische Zellen mit unterschiedlichen, insbesondere unterschiedlich dicken Stromableitern einzusetzen. Im Rahmen der vorliegenden Erfindung besteht aber selbstverständlich auch die Möglichkeit, den Auflagesteg des Rahmenelements bis an die Siegelnaht heranzuführen, d.h. im Wesentlichen ohne Beabstandung zur Siegelnaht auszugestalten.

Speziell bei Lithium-Ionen-Batterien im Kraftfahrzeugbereich besteht die Problematik, dass im Batteriegehäuse im Bereich der Stromableiter der Zellen zudem ein Batteriemanagementsystem und/oder weitere elektronische Komponenten untergebracht sind. Mit der erfindungsgemäßen elektrochemischen Zelle wird in diesem Zusammenhang der Vorteil erreicht, dass bei einem erhöhten Druck und/oder einer erhöhten Temperatur im Innern der Energieeinheit der Druckabbau und der Materialaustrag durch die wenigstens eine Druckentlastungsvorrichtung und nicht im Bereich der Stromableiter und des Batteriemanagementsystems erfolgen. Auf diese Weise können die Betriebssicherheit der Batterie und die Sicherheit der Fahrgäste bei Auftreten eines kritischen Druck- bzw. Temperaturzustandes im Innern der Energieeinheit einer elektrochemischen Zelle erhöht werden. Insbesondere können dabei auch Kurzschlüsse im Bereich der Stromableiter durch elektrisch leitfähige Ventinggase bzw. Elektrolyten verhindert werden.

Unter einer "elektrochemischen Energiespeichervorrichtung" soll vorliegend jede Art von Energiespeicher verstanden werden, dem elektrische Energie entnommen werden kann, wobei im Innern des Energiespeichers eine elektrochemische Reaktion abläuft. Der Begriff umfasst Energiespeicher aller Art, insbesondere Primärbatterien und Sekundärbatterien. Die elektrochemische Energiespeichervorrichtung weist wenigstens eine elektrochemische Zelle, bevorzugt mehrere elektrochemische Zellen auf. Die mehreren elektrochemischen Zellen können zum Speichern einer größeren Ladungsmenge parallel geschaltet sein oder zur Erzielung einer gewünschten Betriebsspannung in Serie geschaltet sein oder eine Kombination aus Parallel- und Serienschaltung bilden.

Gemäß der Erfindung ist die wenigstens eine Druckentlastungsvorrichtung an einer Schmalseite der elektrochemischen Zelle angeordnet, welche dem ersten Randabschnitt der Umhüllung gegenüber liegt. Auf diese Weise erfolgt die Druckableitung bei Entstehen eines Überdrucks im Innern der Energieeinheit (möglichst weit) entfernt von den Stromableitern.

Unter einer "elektrochemischen Zelle" oder "elektrochemischen Energiespeicherzelle" ist vorliegend eine Vorrichtung zu verstehen, welche der Abgabe elektrischer Energie dient, wobei die Energie in chemischer Form gespeichert wird. Im Fall von wiederaufladbaren Sekundärbatterien ist die Zelle auch ausgebildet, um elektrische Energie aufzunehmen, in chemische Energie umzuwandeln und abzuspeichern. Die Gestalt (d.h. insbesondere die Größe und die Geometrie) einer elektrochemischen Zelle kann abhängig von dem verfügbaren Raum gewählt werden. Bevorzugt ist die elektrochemische Zelle im Wesentlichen prismatisch oder zylindrisch ausgebildet. Die vorliegende Erfindung ist insbesondere für elektrochemische Zellen in vorteilhafter Weise einsetzbar, die als Pouch-Zellen oder Coffebag-Zellen bezeichnet werden, ohne dass die elektrochemische Zelle der vorliegenden Erfindung auf diese Anwendung beschränkt sein soll.

In diesem Zusammenhang soll unter einem "Elektrodenstapel" eine Anordnung aus wenigstens zwei Elektroden und einem dazwischen angeordneten Elektrolyten verstanden werden. Der Elektrolyt kann teilweise von einem Separator aufgenommen sein, wobei der Separator dann die Elektroden trennt. Bevorzugt weist der Elektrodenstapel mehrere Schichten von Elektroden und Separatoren auf, wobei die Elektroden gleicher Polarität jeweils vorzugsweise elektrisch miteinander verbunden, insbesondere parallel geschaltet sind. Die Elektroden sind zum Beispiel plattenförmig oder folienartig ausgebildet und sind bevorzugt im Wesentlichen parallel zueinander angeordnet (prismatische Energiespeicherzellen). Der Elektrodenstapel kann auch gewickelt sein und eine im Wesentlichen zylindrische Gestalt besitzen (zylindrische Energiespeicherzellen). Der Begriff "Elektrodenstapel" soll auch derartige Elektrodenwickel beinhalten. Der Elektrodenstapel kann Lithium oder ein anderes Alkalimetall auch in ionischer Form aufweisen.

Unter einem "Stromableiter" soll im Zusammenhang mit der vorliegenden Erfindung ein elektrisch leitendes Konstruktionselement einer elektrochemischen Zelle verstanden werden, welches zum Transport elektrischer Energie in die Zelle oder aus der Zelle heraus dient. Elektrochemische Zellen weisen üblicherweise zwei Arten von Stromableitern auf, die jeweils mit einer der beiden Elektroden oder Elektrodengruppen - Anoden bzw. Kathoden - im Innern der Zelle elektrisch leitend verbunden sind. Mit anderen Worten weist jede Elektrode des Elektrodenstapels der Zelle einen eigenen Stromableiter auf bzw. sind die Elektroden gleicher Polarität des Elektrodenstapels mit einem gemeinsamen Stromableiter verbunden. Die Gestalt der Stromableiter ist an die Gestalt der elektrochemischen Zelle bzw. ihres Elektrodenstapels angepasst.

Der Begriff "Umhüllung" soll jede Art von Vorrichtung beinhalten, welche geeignet ist, den Austritt von Chemikalien aus dem Elektrodenstapel in die Umgebung zu verhindern und die Bestandteile des Elektrodenstapels vor schädigenden äußeren Einflüssen zu schützen. Die Umhüllung kann aus einem oder mehreren Formteilen und/oder folienartig ausgebildet sein. Weiter kann die Umhüllung einlagig oder mehrlagig ausgebildet sein. Außerdem kann die Umhüllung aus einem im Wesentlichen steifen Material oder aus einem elastischen Material gefertigt sein. Die Umhüllung ist vorzugsweise aus einem gasdichten und elektrisch isolierenden Werkstoff oder Schichtverbund gebildet. Die Umhüllung umschließt den Elektrodenstapel bevorzugt möglichst ohne Spalte und Luftpolster, um eine gute Wärmeleitung zwischen der Umhüllung und dem Innern der elektrochemischen Zelle zu ermöglichen.

Unter dem Begriff "Energieeinheit" wird in diesem Zusammenhang eine in sich abgeschlossene Baueinheit verstanden, welche die Eigenschaften der Energiespeicherung und Energieabgabe erfüllt. Die Energieeinheit enthält insbesondere, aber nicht notwendigerweise ausschließlich den Elektrodenstapel, die Stromableiter und die Umhüllung.

Unter einer "Druckentlastungsvorrichtung" sollen im Rahmen der vorliegenden Erfindung alle Arten von Vorrichtungen verstanden werden, die geeignet sind, unter vorbestimmten Bedingungen die Umhüllung zu öffnen, insbesondere im Fall einer Druck- und/oder Temperaturerhöhung im Innern der elektrochemischen Zelle (z.B. aufgrund einer Überlastung oder dergleichen) eine Druckableitung mit oder ohne Materialaustrag aus der Zelle heraus zu ermöglichen. Es wird ausdrücklich darauf hingewiesen, dass die vorliegende Erfindung auf keine speziellen Arten von Druckentlastungsvorrichtungen beschränkt ist. Im Fall von zwei oder mehr Druckentlastungsvorrichtungen an einer elektrochemischen Zelle können diese von der gleichen Art oder unterschiedlich zueinander sein.

Ein "Rahmenelement" im Sinne der vorliegenden Erfindung ist jede konstruktive Vorrichtung, die geeignet ist, eine Energieeinheit einer elektrochemischen Zelle mechanisch zu stabilisieren. Diese Stabilisierung ist insbesondere, aber nicht ausschließlich während des Fertigungsprozesses einer Batterieanordnung mit mehreren elektrochemischen Zellen von Vorteil. Der Begriff "Rahmenelement" soll insbesondere sowohl Vorrichtungen, welche eine Energieeinheit an deren Schmalseiten im Wesentlichen vollumfänglich umschließen (entsprechend einem Rahmen im herkömmlichen Sinn), als auch Vorrichtungen, welche eine Energieeinheit nur an einer Schmalseite, einem Teil der Schmalseiten oder einem Teil einer oder mehrerer Schmalseiten stützen (entsprechend einem Rahmenschenkel oder einer Rahmenschenkelanordnung), umfassen. Das wenigstens eine Rahmenelemente kann bevorzugt einteilig oder mehrteilig ausgebildet sein. Ferner sind Rahmenelemente denkbar, welche eine Energieeinheit (einseitig) nur von einer Hauptseite her stützen oder eine Energieeinheit (beidseitig) von ihren beiden Hauptseiten her stützen.

Die umlaufenden vier Schmalseiten einer Energieeinheit werden in Zusammenhang mit der vorliegenden Erfindung abschnittweise betrachtet ("Randabschnitte" der Umhüllung). Ein erster Randabschnitt der Umhüllung ist im Bereich des wenigstens einen Stromableiters definiert. D.h. eine Umhüllung hat üblicherweise zwei erste Randabschnitte für die zwei Stromableiter zum Minuspolanschluss und zum Pluspolanschluss.

Unter einer "Siegelnaht" wird im Sinne der vorliegenden Erfindung eine fluiddichte (d.h. flüssigkeits- und gasdichte) Verbindung eines Umhüllungsteils mit einer anderen Komponente (insbesondere z.B. einem weiteren Umhüllungsteil oder einem Stromableiter) verstanden. Vorzugsweise weist die Umhüllung an ihrer Verbindungsseite ein Material bzw. eine Materialschicht auf, welche(s) zumindest teilweise aufgeschmolzen und unter Druck gefügt werden kann (so genanntes Heißsiegeln).

Der Begriff "Auflagesteg" soll im Zusammenhang mit der vorliegenden Erfindung jedes konstruktive Element bedeuten, welches an dem Rahmenelement angebracht bzw. vorgesehen ist und in Richtung zu einem Randabschnitt der Umhüllung vorsteht. Der Auflagesteg ist bevorzugt geeignet, einen Randabschnitt der Umhüllung oder eine dort vorhandene Siegelnaht zu kontaktieren, ohne diese(n) zu beschädigen bzw. zu zerstören. Vorteilhaft kann der Auflagesteg zu diesem Zweck auf seiner dem jeweiligen Randabschnitt der Umhüllung zugewandten Seite beschichtet, behandelt oder mit einem Zusatzelement versehen sein. Der Auflagesteg ist vorzugsweise derart ausgestaltet und angeordnet, dass er die Position der Umhüllung in dem betreffenden Randabschnitt festlegt oder zumindest begrenzt bzw. die Siegelnaht der Umhüllung stützt. Die Stützwirkung des Auflagesteges des wenigstens einen Rahmenelements verhindert vorzugsweise ein Reißen der Siegelnaht durch eine Schälspannung, die bei einem Überdruck im Innern der Energieeinheit entsteht.

Nachfolgend werden zu bevorzugende Weiterbildungen der Erfindung beschrieben.

Vorzugsweise ist der wenigstens eine erste Auflagesteg des wenigstens einen Rahmenelements maximal etwa 0,75 mm, bevorzugter maximal etwa 0,5 mm, noch bevorzugter maximal etwa 0,3 mm von der ersten Siegelnaht der Umhüllung beabstandet.
Vorzugsweise weist der wenigstens eine erste Auflagesteg des wenigstens einen Rahmenelements eine Breite in Querrichtung zum ersten Randabschnitt von wenigstens etwa 1,5 mm, bevorzugter von wenigstens etwa 2,5 mm, noch bevorzugter von wenigstens etwa 3 mm auf. Auf diese Weise wird eine ausreichend große Auflage- bzw. Begrenzungsfläche für die erste Siegelnaht am ersten Randabschnitt der Umhüllung zur Verfügung gestellt.

Erfindungsgemäß weist die wenigstens eine Druckentlastungsvorrichtung eine Schwächung wenigstens einer weiteren im Wesentlichen fluiddichten Siegelnaht der Umhüllung oder wenigstens eines weiteren Umhüllungsabschnitts auf, wobei diese weitere Siegelnaht bzw. dieser weitere Umhüllungsabschnitt in einem von dem wenigstens einen ersten Randabschnitt verschiedenen weiteren Randabschnitt der Umhüllung vorgesehen ist. Eine solche Schwächung einer weiteren Siegelnaht bzw. eines weiteren Umhüllungsteils bewirkt, dass die Umhüllung bei Entstehen eines Überdrucks im Innern der Energieeinheit bevorzugt an dieser Stelle aufgeht /aufreißt / aufbricht.
Eine "Schwächung" einer Siegelnaht der Umhüllung oder eines Umhüllungsabschnitts kann vorteilhaft durch eine lokale Schwächung des Materials oder des Materialaufbaus, durch eine spezielle Formgebung der Umhüllung an dieser Stelle, durch das Einbringen von Zusatzelementen mit speziellen physikalischen und/oder chemischen Eigenschaften (z.B. niedrigerer Schmelzpunkt, etc.) in das Material oder den Materialaufbau oder durch eine geringere Festigkeit der Siegelnaht an dieser Stelle erreicht werden.
In einer weiteren bevorzugten Ausführungsform der Erfindung weist die wenigstens eine Druckentlastungsvorrichtung zusätzlich oder alternativ eine Aussparung in dem wenigstens einen Rahmenelement auf, wobei diese Aussparung im Bereich eines von dem wenigstens einen ersten Randabschnitt verschiedenen weiteren Randabschnitts der Umhüllung vorgesehen ist und das Rahmenelement im Bereich dieser Aussparung von einer weiteren Siegelnaht der Umhüllung oder einem weiteren Umhüllungsabschnitt beabstandet ist. Eine derartige Aussparung im Rahmenelement erlaubt bei Entstehen eines Überdrucks im Innern der Energieeinheit ein Ausweichen der Umhüllung bzw. des Umhüllungsmaterials, sodass die Umhüllung bzw. eine Siegelnaht an dieser Stelle einfacher aufgehen / aufbrechen / aufreißen kann.

Vorzugsweise weist die wenigstens eine Druckentlastungsvorrichtung eine Schwächung der/des weiteren Siegelnaht bzw. Umhüllungsabschnitts und eine Aussparung im Rahmenelement auf. Bevorzugt ist die Aussparung in dem wenigstens einen Rahmenelement dann im Wesentlichen im Bereich der Schwächung der weiteren Siegelnaht der Umhüllung oder des weiteren Umhüllungsabschnitts angeordnet ist.

Bei dieser Ausführungsform ist die Schwächung der weiteren Siegelnaht der Umhüllung bzw. des weiteren Umhüllungsabschnitts in Längsrichtung des weiteren Randabschnitts der Umhüllung wenigstens so groß bemessen wie die Aussparung in dem wenigstens einen Rahmenelement.

In einer weiteren bevorzugten Ausgestaltung der Erfindung ist in der Aussparung des Rahmenelements zudem wenigstens eine Öffnungsvorrichtung zum Öffnen der weiteren Siegelnaht der Umhüllung oder des weiteren Umhüllungsabschnitts zum Druckabbau vorgesehen. Der Begriff "Öffnungsvorrichtung" umfasst dabei alle konstruktiven Elemente, die ein Öffnen / Aufgehen / Aufreißen / Aufbrechen der weiteren Siegelnaht bzw. des weiteren Umhüllungsabschnitts im Bereich der Aussparung des Rahmenelements unterstützen. Die Öffnungsvorrichtung weist vorzugsweise ein(en) oder mehrere Zähne, Dornen, Klingen, Schneidelemente oder dergleichen auf.

Die oben erläuterten Ausführungsformen der wenigstens einen Druckentlastungsvorrichtung erlauben ein kontrolliertes Venting an einer vorbestimmten Stelle der Umhüllung außerhalb des Bereichs der Stromableiter.

In einer bevorzugten Ausführungsform der Erfindung weist das wenigstens eine Rahmenelement im Bereich außerhalb des ersten Randabschnitts der Umhüllung wenigstens einen weiteren Auflagesteg auf, welcher zumindest teilweise an einer weiteren Siegelnaht der Umhüllung oder einem weiteren Umhüllungsabschnitt anliegt. Bei dieser Ausführungsform der elektrochemischen Zelle werden die Umhüllung bzw. deren Siegelnähte nicht nur im Bereich des ersten Randabschnitts bei den Stromableitern, sondern auch an anderen Stellen gehalten, um dort ein unerwünschtes Aufgehen / Aufbrechen / Aufreißen bei Entstehen eines Überdrucks im Innern der Energieeinheit zu verhindern und ein kontrolliertes Venting ausschließlich an der wenigstens einen Druckentlastungsvorrichtung zu erzielen.

In einer bevorzugten Ausführungsform kann die gesamte Siegelnaht an dem weiteren Randabschnitt der Umhüllung, der an der dem ersten Randabschnitt bzw. dem Stromableiter gegenüber liegenden Schmalseite liegt, mit einer Schwächung wie oben erläutert versehen sein. In einer weiteren bevorzugten Ausführungsform können zudem die Siegelnähte an weiteren Randabschnitten der Umhüllung, die an den quer zum ersten Randabschnitt verlaufenden Schmalseiten der Energieeinheit liegen, ganz oder teilweise mit einer solchen Schwächung versehen sein.

In einer weiteren bevorzugten Ausführungsform der Erfindung ist die wenigstens eine Druckentlastungsvorrichtung an einer Schmalseite der elektrochemischen Zelle angeordnet, welche im eingebauten Zustand der elektrochemischen Zelle im Wesentlichen unten angeordnet ist. Auf diese Weise erfolgt die Druckableitung bei Entstehen eines Überdrucks im Innern der Energieeinheit nach unten und nicht z.B. in Richtung eines Fahrgastraums eines Kraftfahrzeugs, unter dem die Batterieanordnung mit der/den elektrochemischen Zelle(n) angeordnet ist.

Falls in einer elektrochemischen Energiespeichervorrichtung mehrere solcher elektrochemischen Zellen vorhanden sind, ist vorzugsweise ein Stapel von abwechselnd angeordneten Energieeinheiten und Rahmenelementen derart vorgesehen, dass jede Energieeinheit zwischen zwei Rahmenelementen gehalten ist und jedes Rahmenelement zwei benachbarten Energieeinheiten zugeordnet ist. Auf diese Weise kann die Anzahl der insgesamt erforderlichen Rahmenelemente für die mehreren elektrochemischen Zellen reduziert werden. Die beidseitige Nutzung der Rahmenelemente gilt naturgemäß nur im Innern des Stapels und ist am Rand des Stapels zumindest für die äußersten Rahmenelemente nicht mehr gegeben. Für die beidseitige Nutzung der Rahmenelemente sind diese vorzugsweise in Stapelrichtung im Wesentlichen symmetrisch ausgebildet. Die beidseitige Nutzung der Rahmenelemente kann in diesem Zusammenhang für alle oder nur für einen Teil der elektrochemischen Zellen im Innern des Stapels gelten.

Weitere Vorteile, Merkmale und Anwendungsmöglichkeiten der vorliegenden Erfindung ergeben sich aus der nachfolgenden Beschreibung bevorzugter Ausführungsbeispiele in Zusammenhang mit den Zeichnungen. Darin zeigen:
- Fig. 1: eine schematische perspektivische Explosionsdarstellung einer elektrochemischen Zelle gemäß einem Ausführungsbeispiel der vorliegenden Erfindung;
- Fig. 2: eine schematische Perspektivansicht einer ersten bevorzugten Ausführungsform einer Energieeinheit für eine elektrochemische Zelle gemäß der vorliegenden Erfindung;
- Fig. 3: eine schematische Perspektivansicht einer zweiten bevorzugten Ausführungsform einer Energieeinheit für eine elektrochemische Zelle gemäß der vorliegenden Erfindung;
- Fig. 4: eine schematische Perspektivansicht einer bevorzugten Ausführungsform eines Rahmenelements für eine elektrochemische Zelle gemäß der vorliegenden Erfindung;
- Fig. 5: eine schematische Teilschnittansicht einer elektrochemischen Zelle gemäß der vorliegenden Erfindung zur Erläuterung der erfindungsgemäßen Funktionsweise; und
- Fig. 6: schematische Teilperspektivansichten einer elektrochemischen Zelle gemäß der vorliegenden Erfindung zur Erläuterung der erfindungsgemäßen Funktionsweise.

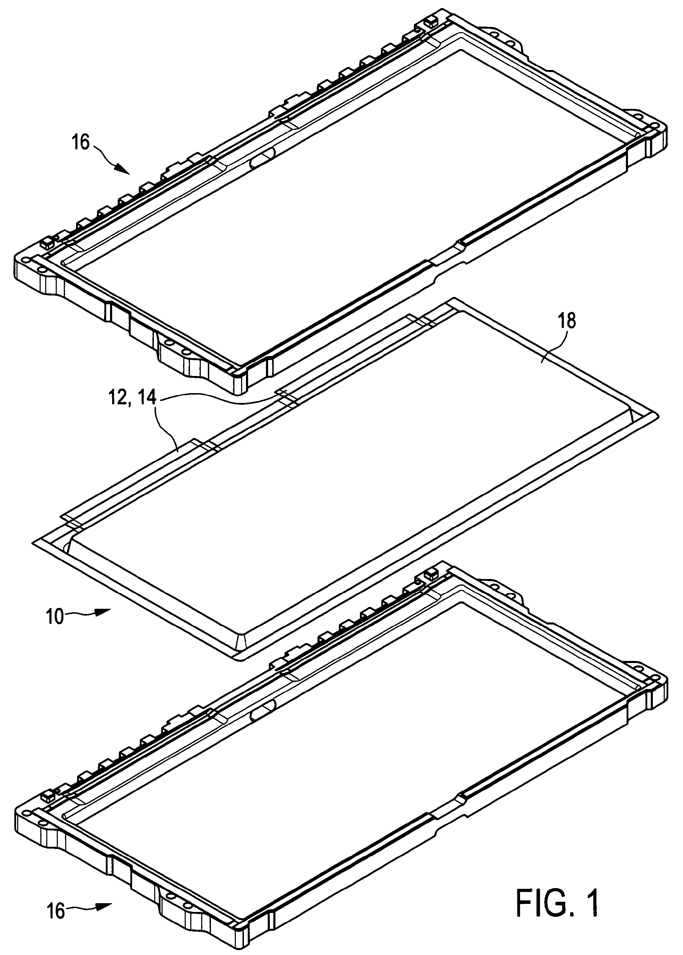

Figur 1 zeigt eine Explosionsdarstellung einer elektrochemischen Zelle mit einer Energieeinheit 10 und zwei Rahmenelementen 16, wobei diese beiden Rahmenelemente 16 jeweils zwei benachbarten Energieeinheiten 10 in einem Stapel von mehreren elektrochemischen Zellen in einer Batterieanordnung zugeordnet sein können.

Die Energieeinheit 10 stellt eine einheitliche Baueinheit dar und enthält einen Elektrodenstapel (nicht dargestellt), einen ersten Stromableiter 12, der mit den Anoden des Elektrodenstapels verbunden ist, einen zweiten Stromableiter 14, der mit den Kathoden des Elektrodenstapels verbunden ist, und eine den Elektrodenstapel umschließende Umhüllung 18 beispielsweise in Form einer mehrschichtigen Folie. Die beiden Stromableiter 12, 14 ragen aus der Umhüllung 18 der Energieeinheit 10 teilweise heraus, um von außen kontaktiert werden zu können.

Diese Energieeinheit 10 wird in dieser Ausführungsform an ihren vier Schmalseiten zwischen den zwei Rahmenelementen 16 vollumfänglich gehalten. Alternativ sind auch mehrteilige Rahmenelemente oder Rahmenelemente, welche die Energieeinheit nur über einen Teil ihres Umfanges halten, denkbar.

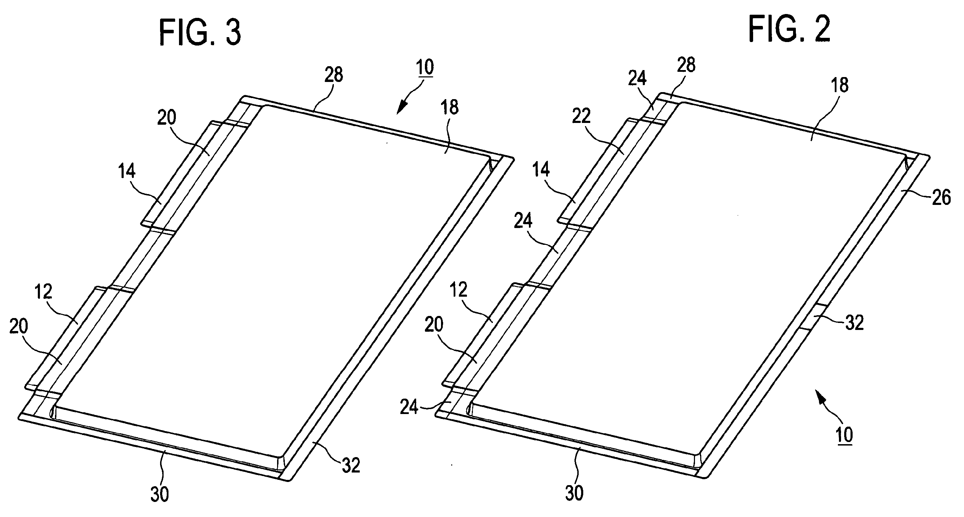

Die Figuren 2 und 3 zeigen zwei mögliche Ausführungsbeispiele einer Energieeinheit für eine derartige elektrochemische Zelle.

In den vorliegenden Ausführungsbeispielen ist die Umhüllung 18 jeweils aus zwei im Wesentlichen deckungsgleichen Umhüllungsteilen aufgebaut, welche den Elektrodenstapel zwischen sich aufnehmend fluiddicht (d.h. flüssigkeits- und gasdicht) miteinander verbunden, insbesondere versiegelt werden, sodass eine umlaufende Siegelnaht gebildet ist. In alternativen Ausführungsbeispielen kann die Umhüllung 18 auch aus einem Umhüllungsteil aufgebaut sein, welches gefaltet und versiegelt wird, sodass an zumindest einer Schmalseite der Energieeinheit 10 eine Siegelnaht entfällt.

Entlang der vier Schmalseiten der Energieeinheit 10 weist die Umhüllung 18 mehrere Randabschnitte auf, welche sich insgesamt vollumfänglich um die Energieeinheit 10 erstrecken. Entsprechend kann auch die umlaufende Siegelnaht (gedanklich) in mehrere Siegelnähte unterteilt werden. In zwei ersten Randabschnitten der Umhüllung 18, in denen sich die beiden Stromableiter 12, 14 aus der Umhüllung heraus erstrecken, ist jeweils eine erste Siegelnaht 20 bzw. 22 vorhanden. Mehrere zweite Siegelnähte 24 sind an den Randabschnitten der Umhüllung 18 definiert, welche außerhalb der ersten Randabschnitte auf derselben Schmalseite der Energieeinheit 10 wie diese liegen.

Eine dritte Siegelnaht 26 ist an dem Randabschnitt der Umhüllung 18 auf der den ersten Randabschnitten gegenüber liegenden Schmalseite der Energieeinheit 10 (rechts in Figuren 2 und 3) gebildet. Eine vierte und eine fünfte Siegelnaht 28 und 30 finden sich an den Randabschnitten der Umhüllung 18 auf den quer zu der Schmalseite mit den Stromableitern 12, 14 verlaufenden Schmalseiten der Energieeinheit 10 (oben bzw. unten in Figuren 2 und 3).

In dem Ausführungsbeispiel von Figur 2 weist die dritte Siegelnaht 26 der Umhüllung 18 eine Schwächung 32 auf, welche sich über einen Teilabschnitt der entsprechenden Schmalseite der Energieeinheit 10 erstreckt.

In dem Ausführungsbeispiel von Figur 3 weist die dritte Siegelnaht 26 der Umhüllung 18 dagegen eine Schwächung 32 auf, welche sich im Wesentlichen über die gesamte Schmalseite der Energieeinheit 10 erstreckt.

In anderen Ausführungsformen der elektrochemischen Zelle können mehrere Schwächungen 32 in der dritten Siegelnaht 26 vorgesehen sein und/oder können auch die vierte und/oder die fünfte Siegelnaht 28, 30 eine oder mehrere Schwächungen aufweisen. Falls an der den ersten Randabschnitten der Umhüllung 18 gegenüber liegenden Schmalseite der Energieeinheit 10 keine Siegelnaht 26, sondern zum Beispiel ein umgelegtes Umhüllungsteil vorhanden ist, sind die genannten Schwächungen 32 entsprechend in einem solchen Umhüllungsabschnitt vorgesehen.

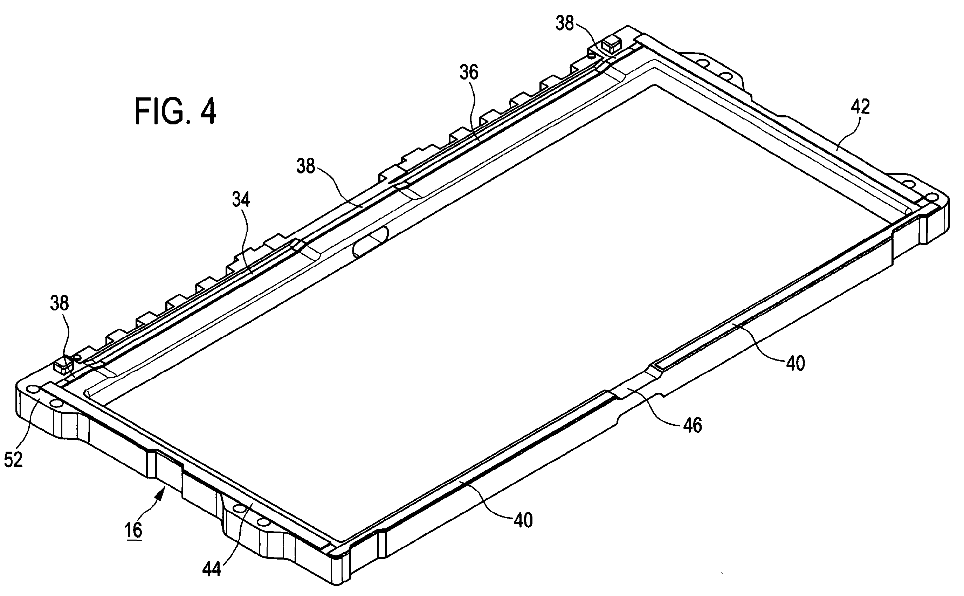

Figur 4 zeigt ein Rahmenelement 16 der elektrochemischen Zelle von Figur 1 in mehr Einzelheiten.
Das Rahmenelement 16 dieses Ausführungsbeispiels ist aus vier Rahmenschenkeln einteilig oder mehrteilig zusammengesetzt, sodass es die vier Schmalseiten der Energieeinheit 10 vollumfänglich umgibt und die jeweiligen Randabschnitte der Umhüllung 18 dort stützen kann.
Wie in Figur 4 dargestellt, ist das Rahmenelement 16 mit mehreren Auflagestegen 34 bis 44 ausgestaltet, die sich von der Seite des Rahmenelements 16 in Richtung zu den Randabschnitten der Umhüllung 18 der angrenzenden Energieeinheit 10 erstrecken. Auf der in Figur 4 nicht sichtbaren abgewandten Seite weist das Rahmenelement 16 diese Auflagestege 34 bis 44 ebenfalls auf. Das Rahmenelement 16 ist somit in Stapelrichtung mehrerer elektrochemischer Zellen in einer Batterieanordnung im Wesentlichen symmetrisch ausgebildet. Die Auflagestege 34 bis 44 sind zum Beispiel an dem Rahmenelement 16 angeformt oder als separate Komponenten ausgebildet und mit dem Rahmenelement 16 fest verbunden.

Die Auflagestege 34 bis 44 des Rahmenelements 16 sind entsprechend den Randabschnitten der Umhüllung 18 an dem Rahmenelement 16 angebracht. Insbesondere ist ein erster Auflagesteg 34 im Bereich der ersten Siegelnaht 20 im ersten Randabschnitt, bei dem sich der erste Stromableiter 12 aus der Umhüllung 18 heraus erstreckt, angeordnet und ist erster Auflagesteg 36 im Bereich der ersten Siegelnaht 22 im ersten Randabschnitt, bei dem sich der zweite Stromableiter 14 aus der Umhüllung 18 heraus erstreckt, angeordnet. Weiter sind zweite Auflagestege 38 im Bereich der zweiten Siegelnähte 24, ein dritter Auflagesteg 40 im Bereich der dritten Siegelnaht 26, ein vierter Auflagesteg 42 im Bereich der vierten Siegelnaht 28 und ein fünfter Auflagesteg 44 im Bereich der fünften Siegelnaht 30 der Umhüllung 18 angeordnet.

Die ersten bis fünften Auflagestege 34 bis 44 sind nahezu vollumfänglich entlang der vier Schmalseiten der Energieeinheit 10 an dem Rahmenelement 16 vorgesehen. Die Auflagestege 34 bis 44 haben in diesem Ausführungsbeispiel unterschiedliche Breiten (quer zu ihrer jeweiligen Längsrichtung), können aber auch im Wesentlichen gleich zueinander dimensioniert sein. Die Breite der Auflagestege 34 bis 44 in Querrichtung zum jeweiligen Randabschnitt beträgt wenigstens etwa 1,5 mm, bevorzugter wenigstens etwa 2,5 mm, noch bevorzugter wenigstens etwa 3 mm, um eine ausreichende Stütze der Siegelnähte 20 bis 30 zu erzielen.

Während die zweiten bis fünften Auflagestege 38 bis 44 jeweils bis an die zweiten bis fünften Siegelnähte 24 bis 30 heranreichen, wenn die elektrochemische Zelle zusammengebaut ist, d.h. wenn das Rahmenelement 16 die Energieeinheit 10 hält bzw. stützt, sind die ersten Auflagestege 34 und 36 schwächer ausgebildet, sodass sie von den ersten Siegelnähten 20 bzw. 22 an den Stromableitern 12 bzw. 14 beabstandet sind.

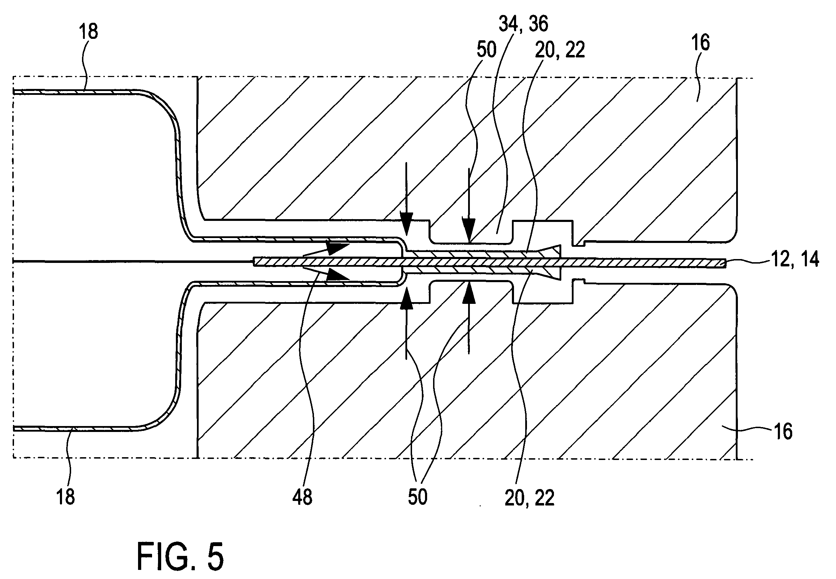

In Figur 5 ist dies für die ersten Auflagestege 34, 36 an den ersten Siegelnähten 20, 22 veranschaulicht. Es ist in Figur 4 insbesondere zu erkennen, dass der mit dem Elektrodenstapel verbundene Stromableiter 12, 14 aus der Umhüllung 18 herausgeführt ist. Die ersten Randabschnitte der Umhüllung 18 sind jeweils mit dem Stromableiter 12, 14 mittels einer Siegelnaht 20, 22 fluiddicht verbunden.

Entsteht im Innern der Zelle bzw. der Energieeinheit 10 ein Überdruck, so erzeugt dieser Überdruck im Bereich der in Figur 5 dargestellten Schwachstelle der Umhüllung 18 Schälkräfte bzw. Schälspannungen (vgl. Pfeile 48), welche die Randabschnitte der Umhüllung 18 auseinander und weg von den Stromableitern 12, 14 zu reißen versuchen. Die oben beschriebenen ersten Auflagestege 34, 36 am Rahmenelement 16, welche bei vergleichbaren Rahmenelementen herkömmlicher elektrochemischer Zellen fehlen, wirken diesem Aufgehen / Aufreißen der ersten Siegelnähte 20, 22 entgegen. Wie durch die Pfeile 50 in Figur 5 veranschaulicht, begrenzen die ersten Auflagestege 34, 36 des Rahmenelements 16 die Möglichkeit der ersten Randabschnitte der Umhüllung 18 auszuweichen und stützen so die ersten Siegelnähte 20, 22. Es kann so wirkungsvoll verhindert werden, dass die Umhüllung 18 bzw. die Siegelnaht 20, 22 bei einem Überdruck im Innern der Energieeinheit 10 im Bereich der Stromableiter 12, 14 aufreißt und die Ventinggase dort austreten.

Wieder zurück zu Figur 4 ist zu erkennen, dass das Rahmenelement 16 ferner an seinem Rahmenschenkel, der mit dem dritten Auflagesteg 40 ausgebildet ist, eine Aussparung 46 aufweist. Die Aussparung 46 entspricht im Wesentlichen einem Fehlen des dritten Auflagesteges 40 in einem Teilabschnitt. Diese Aussparung 46 ist ferner entsprechend der Schwächung 32 der dritten Siegelnaht 26 der Umhüllung 18 in Figur 2 oder an beliebiger, vorzugsweise mittiger Stelle entsprechend der Schwächung 32 der dritten Siegelnaht 26 der Umhüllung 18 in Figur 3 positioniert.

Die Aussparung 46 des Rahmenelements 16 und die Schwächung 32 der dritten Siegelnaht 26 bilden gemeinsam eine Druckentlastungsvorrichtung der elektrochemischen Zelle.

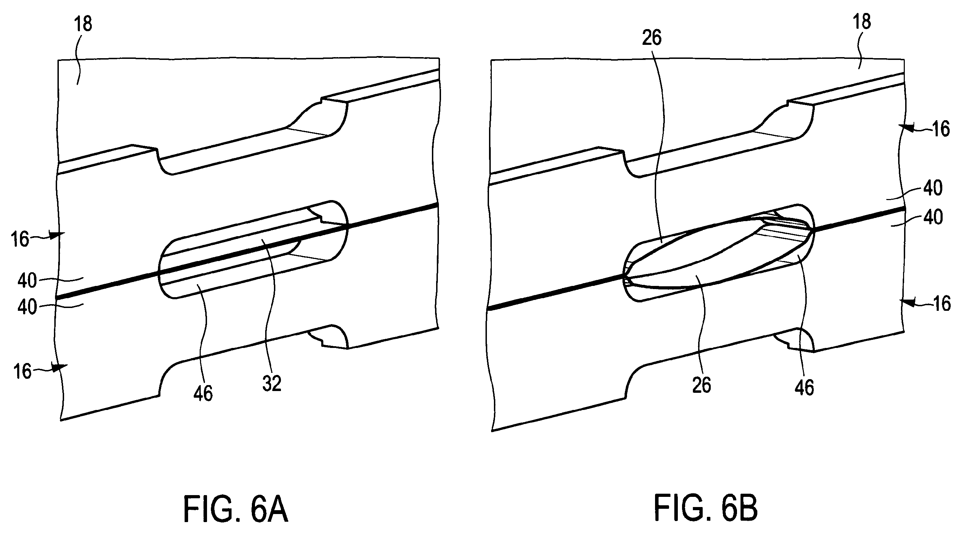

Wie in Figur 6A veranschaulicht, ist das Rahmenelement 16 im Bereich seiner Aussparung 46 im Normalzustand der Zelle (d.h. insbesondere ohne Überdruck im Innern der Zelle) von der dritten Siegelnaht 26 mit ihrer Schwächung 32 beabstandet. Neben der Aussparung 46 liegen dagegen die dritten Auflagestege 40 von zwei benachbarten Rahmenelementen 16 an der Siegelnaht 26 der Umhüllung 18 der dazwischen aufgenommenen Energieeinheit 10 an und halten diese so zusammen.

Falls im Innern der Energieeinheit 10 ein Überdruck entsteht, so wird dieser Überdruck bei der erfindungsgemäßen elektrochemischen Zelle ausschließlich mittels der Druckentlastungsvorrichtung 32, 46 entfernt von den Stromableitern 12, 14 der Energieeinheit 10 und möglichst im unteren Bereich der elektrochemischen Zelle abgeleitet. Wie in Figur 6B dargestellt, bewirkt der Überdruck im Innern der Energieeinheit 10 Schälspannungen an den Siegelnähten 20 bis 30 der Umhüllung 18, die im Bereich der Aussparung 46 des Rahmenelements 16 die dritte Siegelnaht 26 aufreißen.

Durch die Schwächung 32 der dritten Siegelnaht 26 zumindest in diesem Bereich wird sichergestellt, dass die Siegelnaht der Umhüllung bei einem Überdruck im Innern der Energieeinheit 10 auch bei einem Abstand der ersten Auflagestege 34, 36 von den ersten Siegelnähten 20, 22 bei den Stromableitern 12, 14 als erstes bei der Druckentlastungsvorrichtung aufreißt.

Zur Erhöhung der mechanischen Stabilität einer elektrochemischen Zelle und insbesondere eines Stapels von mehreren elektrochemischen Zellen für eine Batterieanordnung sind die Rahmenelemente 16 bevorzugt zudem mit Befestigungsvorrichtungen 52 ausgestaltet (vgl. Figur 4), mit denen zwei benachbarte Rahmenelemente 16 oder alle Rahmenelemente 16 eines Zellenstapels zueinander ausgerichtet und/oder fest miteinander verbunden werden können (z.B. mittels Schrauben, Nieten, Klemmzapfen oder dergleichen). Diese Verbindung ist darüber hinaus auch für die Stützwirkung der Auflagestege 34-44 gegen die Siegelnähte 20-30 der Umhüllung 18 von Vorteil.

## Patentansprüche

1. Elektrochemische Zelle, mit
- einer Energieeinheit (10), welche einen Elektrodenstapel, wenigstens einen mit dem Elektrodenstapel verbundenen Stromableiter (12, 14) und eine den Elektrodenstapel zumindest teilweise umschließende Umhüllung (18) aufweist;
- wenigstens einem Rahmenelement (16), welches die Energieeinheit (10) zumindest teilweise aufnimmt; und
- wenigstens einer Druckentlastungsvorrichtung (32, 46) zum Abbau eines Überdrucks in der Energieeinheit (10),
wobei die Umhüllung (18) der Energieeinheit (10) an den umlaufenden Schmalseiten der elektrochemischen Zelle mehrere Randabschnitte aufweist, wobei sich der wenigstens eine Stromableiter (12, 14) in einem ersten Randabschnitt zumindest teilweise aus der Umhüllung (18) heraus erstreckt und dieser erste Randabschnitt der Umhüllung (18) eine im Wesentlichen fluiddichte erste Siegelnaht (20, 22) aufweist, und wobei das wenigstens eine Rahmenelement (16) im Bereich des ersten Randabschnitts der Umhüllung (18) wenigstens einen ersten Auflagesteg (34, 36) aufweist, welcher maximal etwa 1 mm von der ersten Siegelnaht (20, 22) der Umhüllung (18) beabstandet ist, und
wobei die wenigstens eine Druckentlastungsvorrichtung (32, 46) eine Schwächung (32) einer weiteren im Wesentlichen fluiddichten Siegelnaht (26) der Umhüllung (18) oder eines weiteren Umhüllungsabschnitts aufweist, wobei diese weitere Siegelnaht (26) bzw. dieser weitere Umhüllungsabschnitt in einem von dem wenigstens einen ersten Randabschnitt verschiedenen weiteren Randabschnitt der Umhüllung (18) vorgesehen ist, **dadurch gekennzeichnet, dass** die wenigstens eine Druckentlastungsvorrichtung (32, 46) an einer Schmalseite der elektronischen Zelle angeordnet ist, welche dem ersten Randabschnitt der Umhüllung (18) gegenüber liegt.

2. Elektrochemische Zelle gemäß Anspruch 1, **dadurch gekennzeichnet, dass** der wenigstens eine erste Auflagesteg (34, 36) des wenigstens einen Rahmenelements (16) maximal etwa 0,75 mm, bevorzugter maximal etwa 0,5 mm, noch bevorzugter maximal etwa 0,3 mm von der ersten Siegelnaht (20, 22) der Umhüllung beabstandet ist.

3. Elektrochemische Zelle gemäß mindestens einem der vorhergehenden Ansprüche, **dadurch gekennzeichnet, dass** der wenigstens eine erste Auflagesteg (34, 36) des wenigstens einen Rahmenelements (16) eine Breite in Querrichtung zum ersten Randabschnitt von wenigstens etwa 1,5 mm, bevorzugter von wenigstens etwa 2,5 mm, noch bevorzugter von wenigstens etwa 3 mm aufweist.

4. Elektrochemische Zelle gemäß mindestens einem der vorhergehenden Ansprüche, **dadurch gekennzeichnet, dass** die wenigstens eine Druckentlastungsvorrichtung (32, 46) eine Aussparung (46) in dem wenigstens einen Rahmenelement (16) aufweist, wobei diese Aussparung (46) im Bereich eines von dem wenigstens einen ersten Randabschnitt verschiedenen weiteren Randabschnitts der Umhüllung (18) vorgesehen ist und das Rahmenelement (16) im Bereich dieser Aussparung (46) von einer weiteren Siegelnaht (26) der Umhüllung (18) oder einem weiteren Umhüllungsabschnitt beabstandet ist.

5. Elektrochemische Zelle gemäß Anspruch 3 und 4, **dadurch gekennzeichnet, dass** die Aussparung (46) in dem wenigstens einen Rahmenelement (16) im Wesentlichen im Bereich der Schwächung (32) der weiteren Siegelnaht (26) der Umhüllung (18) oder des weiteren Umhüllungsabschnitts angeordnet ist.

6. Elektrochemische Zelle gemäß Anspruch 5, **dadurch gekennzeichnet, dass** die Schwächung (32) der weiteren Siegelnaht (26) der Umhüllung (18) oder des weiteren Umhüllungsabschnitts in Längsrichtung des weiteren Randabschnitts der Umhüllung (18) wenigstens so groß bemessen ist wie die Aussparung (46) in dem wenigstens einen Rahmenelement (16).

7. Elektrochemische Zelle gemäß mindestens einem der Ansprüche 4 bis 6, **dadurch gekennzeichnet, dass** in der Aussparung (46) des Rahmenelements (16) wenigstens eine Öffnungsvorrichtung zum Öffnen der weiteren Siegelnaht (26) der Umhüllung (18) oder des weiteren Umhüllungsabschnitts vorgesehen ist.

8. Elektrochemische Zelle gemäß mindestens einem der vorhergehenden Ansprüche, **dadurch gekennzeichnet, dass** das wenigstens eine Rahmenelement (16) im Bereich außerhalb des ersten Randabschnitts der Umhüllung (18) wenigstens einen weiteren Auflagesteg (38, 40, 42, 44) aufweist, welcher zumindest teilweise an einer weiteren Siegelnaht (24, 26, 28, 30) der Umhüllung (18) oder einem weiteren Umhüllungsabschnitt anliegt.

9. Elektrochemische Energiespeichervorrichtung mit einem Stapel von mehreren elektrochemischen Zellen gemäß mindestens einem der vorhergehenden Ansprüche.

10. Elektrochemische Energiespeichervorrichtung gemäß Anspruch 9, **dadurch gekennzeichnet, dass** ein Stapel von abwechselnd angeordneten Energieeinheiten (10) und Rahmenelementen (16) derart vorgesehen ist, dass jede Energieeinheit (10) zwischen zwei Rahmenelementen (16) gehalten ist und jedes Rahmenelement (16) zwei benachbarten Energieeinheiten (10) zugeordnet ist.

11. Kraftfahrzeug, mit einer elektrochemischen Energiespeichervorrichtung nach Anspruch 9 oder 10, wobei die wenigstens eine Druckentlastungsvorrichtung (32, 46) jeweils an einer Schmalseite der elektrochemischen Zelle angeordnet ist, welche im Wesentlichen unten angeordnet ist.

## Claims

1. Electrochemical cell, comprising
- an energy unit (10) having an electrode stack, at least one current arrester (12, 14) connected to the electrode stack and a cover (18), which at least partially encloses the electrode stack;
- at least one frame element (16), which at least partially accommodates the energy unit (10); and
- at least one pressure relief device (32, 46) for relieving an excess pressure in the energy unit (10),
wherein the cover (18) of the energy unit (10) has a plurality of edge sections at the circumferential narrow sides of the electrochemical cell, wherein the at least one current arrester (12, 14) at least partially projects from the cover (18) in a first edge section and this first edge section of the cover (18) has a substantially fluid-tight first sealing seam (20, 22), and wherein the at least one frame element (16) has, in the region of the first edge section of the cover (18), at least one first support web (34, 36), which has a maximum distance of approximately 1 mm from the first sealing seam (20, 22) of the cover (18), and wherein the at least one pressure relief device (32, 46) comprises a weakening (32) of a further substantially fluid-tight sealing seam (26) of the cover (18) or of a further cover section, this further sealing seam (26) or this further cover section being provided in a further edge section of the cover (18) which is different from the at least one first edge section, **characterised in that** the at least one pressure relief device (32, 46) is located on a narrow side of the electronic cell which is located opposite the first edge section of the cover (18).

2. Electrochemical cell according to claim 1, **characterised in that** the at least one first support web (34, 36) of the at least one frame element (16) has a maximum distance of approximately 0.75 mm, preferably a maximum distance of approximately 0.5 mm and especially preferably a maximum distance of approximately 0.3 mm from the first sealing seam (20, 22) of the cover.

3. Electrochemical cell according to one or more of the preceding claims, **characterised in that** the at least one first support web (34, 36) of the at least one frame element (16) has a width in the transverse direction to the first frame section of at least approximately 1.5 mm, preferably of at least approximately 2.5 mm and especially preferably of at least approximately 3 mm.

4. Electrochemical cell according to one or more of the preceding claims, **characterised in that** the at least one pressure relief device (32, 46) has a recess (46) in the at least one frame element (16), this recess (46) being provided in the region of a further edge section of the cover (18) which is different from the at least one first edge section and the frame element (16) having in the region of this recess (46) a distance from a further sealing seam (26) of the cover (18) or from a further cover section.

5. Electrochemical cell according to claims 3 and 4, **characterised in that** the recess (46) in the at least one frame element (16) is substantially located in the region of the weakening (32) of the further sealing seam (26) of the cover (18) or of the further cover section.

6. Electrochemical cell according to claim 5, **characterised in that** the weakening (32) of the further sealing seam (26) of the cover (18) or of the further cover section is dimensioned to be at least as large in the longitudinal direction of a further edge section of the cover (18) as the recess (46) in the at least one frame element (16).

7. Electrochemical cell according to any of claims 4 to 6, **characterised in that** at least one opening device for opening the further sealing seam (26) of the cover (18) or of the further cover section is provided in the recess (46) of the frame element (16).

8. Electrochemical cell according to one or more of the preceding claims, **characterised in that** the at least one frame element (16) has, in the region outside the first edge section of the cover (18), at least one further support web (38, 40, 42, 44), which at least partially bears against a further sealing seam (24, 26, 28, 30) of the cover (18) or against a further cover section.

9. Electrochemical energy storage device comprising a stack of a plurality of electrochemical cells according to one or more of the preceding claims.

10. Electrochemical energy storage device according to claim 9, **characterised in that** a stack of alternately arranged energy units (10) and frame elements (16) is provided in such a way that each energy unit (10) is held between two frame elements (16) and each frame element (16) is assigned to two adjacent energy units (10).

11. Motor vehicle comprising an electrochemical energy storage device according to claim 9 or 10, wherein the at least one pressure relief device (32, 46) is located on a narrow side of the electrochemical cell, which is substantially located at the bottom.

## Revendications

1. Cellule électrochimique comprenant
- une unité (10) de puissance qui comporte un empilement d'électrodes, au moins un dérivateur (12, 14) de courant connecté à l'empilement d'électrodes et une enveloppe (18) renfermant au moins partiellement l'empilement d'électrodes ;
- au moins un élément (16) de cadre qui loge au moins partiellement l'unité (10) de puissance ; et
- au moins un dispositif de détente de pression (32, 46) destiné à éliminer une surpression dans l'unité (10) de puissance,
l'enveloppe (18) de l'unité (10) de puissance présentant sur les côtés étroits circonférentiels de la cellule électrochimique plusieurs sections de bord, l'au moins un dérivateur (12, 14) de courant s'étendant dans une première section de bord au moins partiellement à partir de l'enveloppe (18) et ladite première partie de bord de l'enveloppe (18) présentant un premier joint d'étanchéité (20, 22) essentiellement étanche au fluide, et l'au moins un élément de cadre (16) dans la zone de la première section de bord de l'enveloppe (18) présentant au moins une entretoise d'appui (34, 36) qui est éloignée au maximum d'environ 1 mm du premier joint d'étanchéité (20, 22) de l'enveloppe (18), et l'au moins un dispositif de détente de pression (32, 46) présentant un affaiblissement (32) d'un autre joint d'étanchéité (26) essentiellement étanche au fluide de l'enveloppe (18) ou d'une autre section d'enveloppe, ledit autre joint d'étanchéité (26) ou ladite autre section d'enveloppe étant disposé(e) dans une autre section de bord de l'enveloppe (18) différente de l'au moins une première section de bord, **caractérisée en ce que** l'au moins un dispositif de détente de pression (32, 46) est disposé sur un côté étroit de la cellule électronique, qui fait face à la première section de bord de l'enveloppe (18).

2. Cellule électrochimique selon la revendication 1, **caractérisée en ce que** l'au moins une première entretoise d'appui (34, 36) de l'au moins un élément de cadre (16) est éloignée au maximum d'environ 0,75 mm, de préférence au maximum d'environ 0,5 mm, de préférence encore au maximum d'environ 0,3 mm du premier joint d'étanchéité (20, 22) de l'enveloppe.

3. Cellule électrochimique selon au moins l'une des revendications précédentes, **caractérisée en ce que** l'au moins une première entretoise d'appui (34, 36) de l'au moins un élément de cadre (16) présente une largeur dans la direction transversale par rapport à la première section de bord d'au moins environ 1,5 mm, de préférence au moins environ 2,5 mm, de préférence encore au moins environ 3 m.

4. Cellule électrochimique selon l'une quelconque des revendications précédentes, **caractérisée en ce que** l'au moins un dispositif de détente de pression (32, 46) présente un évidemment (46) dans l'au moins un élément de cadre (16), ledit évidemment (46) étant disposé sur la zone d'une autre section de bord de l'enveloppe (18) différente de l'au moins une première section de bord et l'élément de cadre (16) étant éloigné dans la zone dudit évidemment (46) d'un autre joint d'étanchéité (26) de l'enveloppe (18) ou d'une autre section d'enveloppe.

5. Cellule électrochimique selon la revendication 3 et 4, **caractérisée en ce que** l'évidemment (46) est aménagé dans l'au moins un élément de cadre (16) essentiellement dans la zone de l'affaiblissement (32) de l'autre joint d'étanchéité (26) de l'enveloppe (18) ou de l'autre section d'enveloppe.

6. Cellule électrochimique selon la revendication 5, **caractérisée en ce que** l'affaiblissement (32) de l'autre joint d'étanchéité (26) de l'enveloppe (18) ou de l'autre section d'enveloppe dans la direction longitudinale de l'autre section de bord de l'enveloppe (18) est au moins égale à l'évidemment (46) dans l'au moins un élément de cadre (16).

7. Cellule électrochimique selon l'au moins l'une quelconque des revendications 4 à 6, **caractérisée en ce que** dans l'évidemment (46) de l'élément de cadre (16) est aménagé au moins un dispositif d'ouverture destiné à ouvrir l'autre joint d'étanchéité (26) de l'enveloppe (18) ou de l'autre section d'enveloppe.

8. Cellule électrochimique selon au moins l'une des revendications précédentes, **caractérisée en ce que** l'au moins un élément de cadre (16) présente dans la zone à l'extérieure de la première section de bord de l'enveloppe (18) au moins une autre entretoise d'appui (38, 40, 42, 44), qui au moins partiellement repose sur un autre joint d'étanchéité (24, 26, 28, 30) de l'enveloppe (18) ou sur une autre section d'enveloppe.

9. Dispositif de stockage d'énergie électrochimique comprenant un empilement de plusieurs cellules électrochimiques selon au moins l'une quelconque des revendications précédentes.

10. Dispositif de stockage d'énergie électrochimique selon la revendication 9, **caractérisé en ce qu'**il est prévu un empilement d'unités (10) de puissance et des éléments de cadre (16) disposés en alternance de sorte que chaque unité (10) de puissance soit maintenue entre deux éléments de cadre (16) et que chaque élément de cadre (16) soit associé à deux unités (10) de puissance adjacentes.

11. Véhicule automobile comprenant un dispositif de stockage d'énergie électrochimique selon la revendication 9 ou la revendication 10, l'au moins un dispositif de détente de pression (32, 46) étant respectivement disposé sur un côté étroit de la cellule électronique, qui est disposée essentiellement dans la partie inférieure.
